# FASCICULE DE BREVET EUROPEEN

(11) **EP 1 153 561 B1**
(45) Date de publication et mention de la délivrance du brevet: **27.07.2005**
(21) Numéro de dépôt: 00110102.1
(22) Date de dépôt: 09.05.2000
(51) Int. Cl.: A47J 31/40

(54) **Dispositif pour l'extraction d'une substance**
Vorrichtung zum Extrahieren einer Substanz
Device for extracting a substance

(43) Date de publication de la demande: 14.11.2001
(73) Titulaire: SOCIETE DES PRODUITS NESTLE S.A., 1800 Vevey (CH)
(72) Inventeur: Kollep, Alexandre, 1095 Lutry (CH); Yoakim, Alfred, 1806 St-Legier-La Chiesaz (CH); Cahen, Antoine, 1005 Lausanne (CH)
(74) Mandataire: Borne, Patrice Daniel

(56) Documents cités:
- EP-A- 0 512 470
- EP-A- 0 604 615
- WO-A-00/49926
- DE-A- 19 647 039
- US-A- 3 599 557
- PATENT ABSTRACTS OF JAPAN vol. 015, no. 324 (C-0859), 19 août 1991 (1991-08-19) & JP 03 123516 A (LUCKY CAFE MACH KK;OTHERS: 01), 27 mai 1991 (1991-05-27)

## Description

La présente invention concerne un dispositif pour l'extraction d'une substance pour la préparation d'une boisson à partir d'une cartouche.

Un dispositif d'extraction d'une substance pour la préparation d'une boisson est déjà connue. Le brevet EP 512'470 concerne un système pour l'extraction de cartouches fermées. L'inconvénient de ce système est que le consommateur doit être tout le temps à côté de la machine pour arrêter l'extraction, sortir la cartouche usagée et remettre une nouvelle cartouche pour un second café. Le but de la présente invention est un dispositif d'extraction de cartouches , dans lequel on peut arriver à obtenir deux boissons, sans que le consommateur ait à agir.

La présente invention concerne un dispositif pour l'extraction d'une substance, dans lequel le consommateur dispose la première cartouche à extraire, immédiatement après la seconde cartouche à extraire, et peut ensuite laisser la machine opérer automatiquement la préparation des deux boissons. Ce dispositif est d'un grand intérêt dans les bureaux, à la maison et dans tout endroit où l'utilisateur a la nécessité de procéder à d'autres tâches pendant l'extraction, par exemple dans les cafés, hôtels, restaurant et autres.

Le document DE 19647039 divulgue une machine à café comprenant un tiroir mobile; lequel ne peut pas retourner en position de chargement avant la réouverture de la tête de percolation.

Le document JP 03112516 se rapporte à un dispositif d'extraction de boissons avec un chargeur qui est aussi maintenu en place par l'abaissement de la tête d'extraction.

La présente invention concerne donc un dispositif pour l'extraction d'une substance pour la préparation d'une boisson à partir d'une cartouche, comprenant
- un châssis avec un socle, une partie verticale sur ledit socle et une partie horizontale disposé à une certaine distance du socle,
- un tiroir mobile,
- un système d'éléments pour recevoir la capsule et permettre l'écoulement de la boisson, et
- un système d'extraction mobile vers ledit système d'éléments pour emprisonner et extraire la cartouche caractérisé en ce que
   la partie horizontale comprend le système d'élément; le système d'extraction étant disposé au dessus du système d'élément, et en ce que
   le tiroir mobile est configuré pour glisser sur la partie horizontale de façon à entraîner une première capsule jusqu'à son positionnement sur le système d'éléments, et permettre un retour en position initiale pour le placement d'une deuxième capsule tout en gardant la première capsule sur le système d'élément.

On peut extraire dans le dispositif selon l'invention aussi bien des cartouches fermées, comme celles décrites dans le brevet EP 512'468 et EP 602'203 au nom du demandeur. On peut également utiliser le dispositif pour extraire d'autres sachets, capsules ou cartouches fermées. Il est également possible d'utiliser le dispositif selon l'invention pour des cartouches ouvertes, par exemple des cartouches en matière plastique ou des sachets en papier filtre , en non tissés.

La substance contenue dans la cartouche fermée, ouverte ou autre est une substance pulvérulente pour la préparation d'une boisson. Cette substance est de préférence du café torréfié et moulu, mais peut aussi être du thé, du café soluble, un mélange de café moulu et de café soluble, un produit chocolaté ou toute autre substance comestible deshydratée.

La distance séparant le socle de la partie horizontale du châssis correspond à sensiblement un peu plus que la hauteur de tasse dans laquelle va couler le café.

Le tiroir mobile du dispositif comprend une partie en arc de cercle permettant lors du mouvement dudit tiroir d'amener la cartouche à extraire dans la position où elle sera extraite. Le tiroir a un mouvement vers l'arrière pour tirer la cartouche et immédiatement revient à sa position initiale, ce qui permet de mettre de suite une nouvelle cartouche à extraire.

Le système d'extraction utilisé peut par exemple être celui faisant l'objet du brevet EP 242'556. Si le dispositif selon l'invention est utilisé pour extraire des cartouches fermées, il faut que les éléments permettant l'écoulement de la boisson soient sous la forme d'une plaquette avec de éléments en creux et en relief , comme ceux mentionnés dans les brevets EP 512'470 et EP 604'615 au nom du demandeur.

Le système d'extraction de la cartouche est soutenu par deux moyens verticaux sur la partie horizontale du châssis, à l'extérieur du tiroir mobile. Les guides sont maintenus en place par un système de boulons.

Dans le dispositif selon l'invention, le système d'éléments permettant l'écoulement de la boisson fait partie d' un éjecteur pour la mise au rebut des cartouches usagées sur l'arrière du dispositif, celui-ci étant actionné lors de la montée du système d'extraction.

Le système d'extraction comprend une cage à cartouche, par exemple celle faisant l'objet du brevet EP 242'556, mentionné ci-dessus, qui se déplace vers les éléments permettant l'écoulement de la boisson grâce à un piston. Ce piston est mis en mouvement grâce à un moteur.

Comme mentionné ci-dessus, le dispositif selon l'invention permet de faire deux cafés à la suite. Pour cela, on dispose sous les éléments permettant l'écoulement de la boisson un canal d'écoulement à deux positions pour le remplissage successif de deux tasses. Ce canal d'écoulement est mu par un moteur.

Il existe donc dans le dispositif selon l'invention trois moteurs : un pour le déplacement du tiroir, un pour la montée et la descente du système d'extraction de cartouche et le troisième pour le canal d'écoulement.

La suite de la description est faite en référence aux dessins, sur lesquels :
Fig. 1 est une représentation du dispositif selon l'invention en perspective et vide,
Fig. 2 est une représentation similaire de celle de la fig. 1 avec une cartouche à extraire,
Fig. 3 est une représentation du dispositif en marche,
Fig. 4 est une représentation du dispositif en fin d'extraction et
Fig. 5 est une représentation en coupe du système d'extraction selon la ligne A-A de la figure 3.

Le châssis de la machine comprend un socle (16), une partie verticale (17) et une partie horizontale (18). Un tiroir mobile (19) est disposé sur la partie horizontale précitée. Ce tiroir comprend une partie avant (20) ayant une forme en arc de cercle. La partie horizontale comprend un système d'éléments (21) permettant l'écoulement de la boisson, ce système faisant partie d'un éjecteur (22) pour la mise au rebut des cartouches extraites à l'arrière (23) de la machine. Le système d'extraction (24) est soutenu par deux guides verticaux (25), maintenus par des boulons (26) et comprend une arrivée d'eau chaude selon la flèche A. Les éléments (27) et (28) permettent un bon guidage et un bon maintien du système d'extraction (24). Le canal d'écoulement (29) permet l'arrivée du café dans la tasse (30).

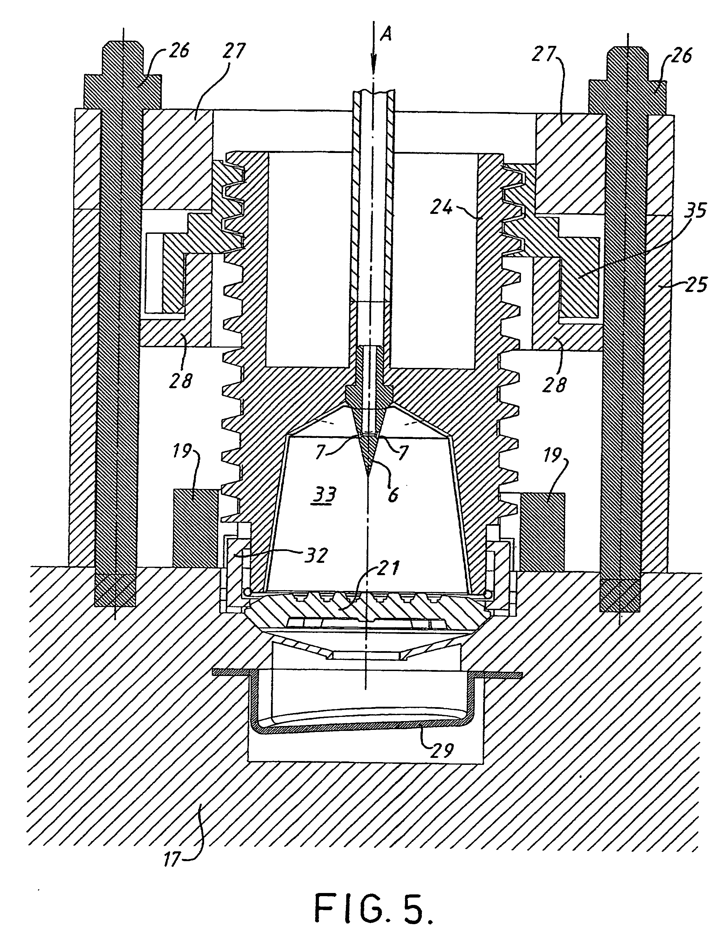

La figure 5 montre une coupe du dispositif selon l'invention lorsqu'il est en position d'extraction de la cartouche (33). Le système d'extraction comprend une cage à cartouche (8) dans laquelle est logée la cartouche (33). L'eau chaude de A arrive par l'organe d'injection (6) comportant deux trous (7) et entre dans la cartouche (33). La roue dentée (35) est mue par un moteur non représenté et permet la descente et la montée du système d'extraction (24). Le crochet (32) permet le dégagement de la cartouche usagée en dehors de la cage à cartouche (8).

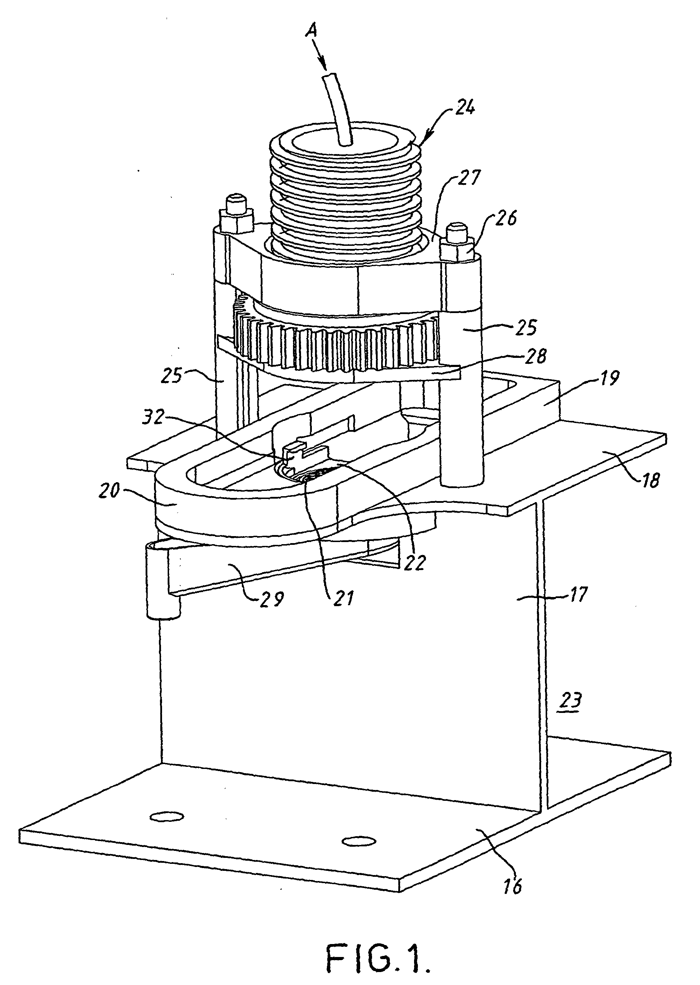

Le fonctionnement du dispositif selon l'invention est le suivant : La figure 1 montre le dispositif à vide sans cartouche, le système d'extraction (24) en position haute et le tiroir mobile (19) en position avancée. L'éjecteur (22) comporte un moyen d'entrainement non représenté permettant le basculement dudit éjecteur pour l'évacuation de la cartouche usagée. L'arrivée d'eau est indiquée par la flèche A.

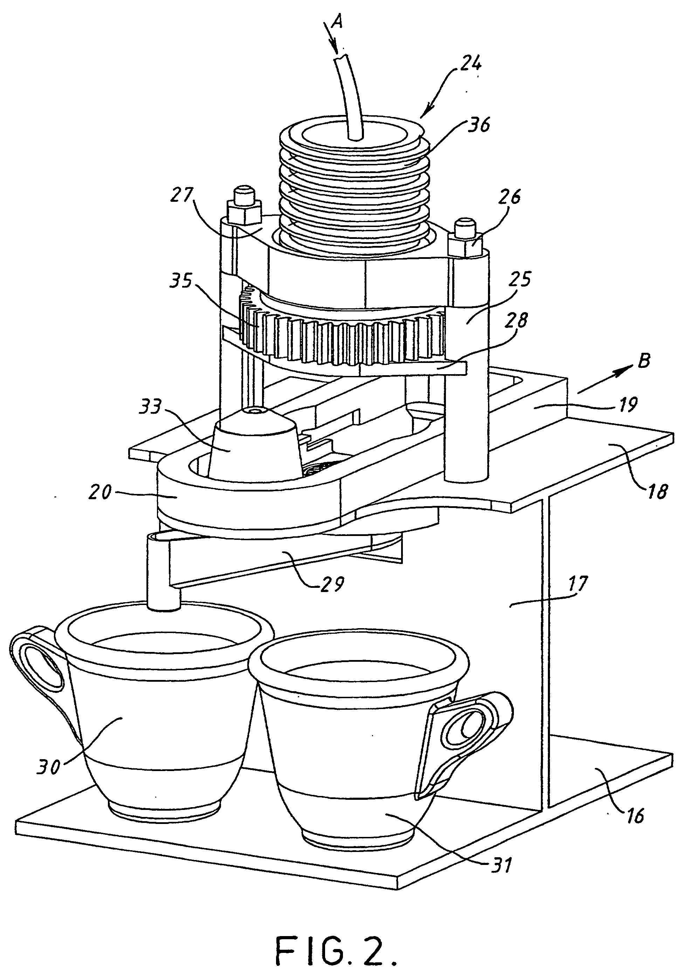

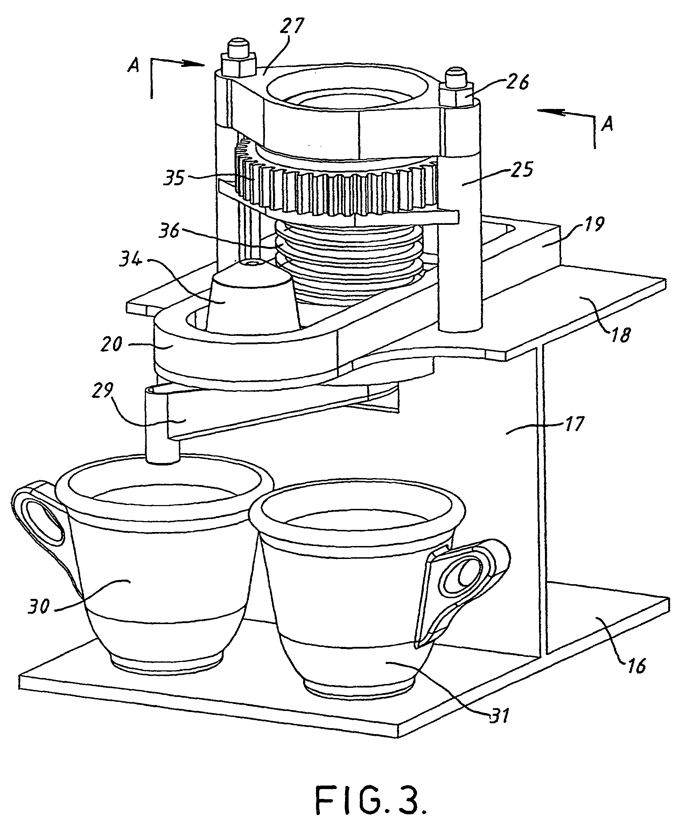

La figure 2 montre les deux tasses (30) et (31) sous le canal d'écoulement (29) et la cartouche à extraire (33) est disposée à l'intérieur du tiroir mobile (19) dans la partie avant (20) en forme d'arc de cercle. Le consommateur souhaite préparer un café et appuie sur le bouton de la machine (non représenté) pour démarrer la préparation du premier café. L'ordre de démarrage est électroniquement transmis et le tiroir mobile se déplace dans le sens de la flèche B, de manière à entrainer la cartouche (33) sur le système d'éléments (21) permettant l'écoulement de la boisson. Puis le tiroir mobile (19) revient dans sa position initiale et le consommateur peut placer la seconde cartouche (34) à extraire (Fig. 3). Le système comprend donc un premier moteur (non représenté) pour le déplacement du tiroir mobile (19). La première cartouche (33) étant en position un second moteur (non représenté) met en rotation la roue dentée (35), qui elle-même grâce à un filetage intérieure prend sur le piston (36) du système d'extraction (24) et permet la descente dudit système d'extraction dans la position de la figure 3, de manière à avoir une bonne étanchéité pour l'extraction. L'eau chaude arrive alors selon A et coule dans la cartouche (33) et sous l'effet de la pression la face inférieure de la cartouche s'ouvre contre le système d'éléments (21), de sorte que le café s'écoule par le canal d'écoulement (29) dans la tasse (30).

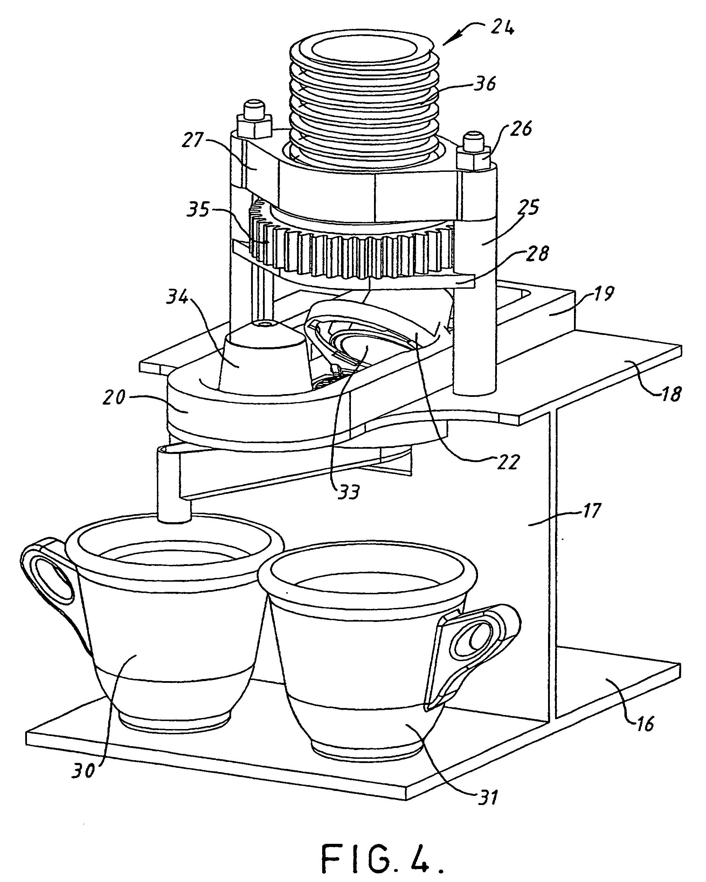

En fin d'extraction, le second moteur fait remonter le système d'extraction (24), lors de sa montée le crochet (32) permet la sortie de la cartouche usagée hors de la cage à capsule et l'éjecteur (22) est actionné par l'intermédiaire d'un moyen non représenté pour basculer vers l'arrière de la machine la cartouche (33) (Fig. 4). On se retrouve alors dans la position de la figure 2 avec la cartouche (34) prête à être extraite. Un troisième moteur (non représenté) permet alors au canal d'écoulement (29) de venir en position pour le remplissage de la tasse (31). Les étapes de l'extraction sont les mêmes que celles de l'extraction de la cartouche (33).

Le consommateur après avoir posé la cartouche (33) et immédiatement après la cartouche (34) peut laisser la machine effectuer les deux opérations d'extraction. Au bout de quelques minutes, il revient et dispose de deux cafés prêts. Il peut alors recommencer la procédure pour deux nouveaux cafés.

## Revendications

1. Dispositif pour l'extraction d'une substance pour la préparation d'une boisson à partir d'une cartouche (33), comprenant
- un châssis avec un socle (16), une partie verticale (17) sur ledit socle et une partie horizontale (18) disposée à une certaine distance du socle,
- un tiroir mobile (19)
- un système d'éléments (21) pour recevoir la capsule et permettre l'écoulement de la boisson, et
- un système d'extraction (24) mobile vers ledit système d'éléments pour emprisonner et extraire la cartouche
**caractérisé en ce que**
la partie horizontale (18) comprend le système d'élément (21); le système d'extraction (24) étant disposé au dessus du système d'élément (21), et **en ce que**
le tiroir mobile (19) est configuré pour glisser sur la partie horizontale (18) de façon à entraîner une première capsule (33) jusqu'à son positionnement sur le système d'éléments, et permettre un retour en position initiale pour le placement d'une deuxième capsule (31) tout en gardant la première capsule sur le système d'élément (21).

2. Dispositif selon la revendication 1, dans lequel le système d'extraction (24) de la cartouche est soutenu par deux moyens verticaux (25) sur la partie horizontale du châssis, à l'extérieur du tiroir mobile (19).

3. Dispositif selon l'une des revendications 1 ou 2, dans lequel le système d'éléments (21) permettant l'écoulement de la boisson fait partie d'un éjecteur (32) pour la mise au rebut des cartouches usagées sur l'arrière du dispositif, celui-ci étant actionné lors de la montée du système d'extraction (24).

4. Dispositif selon l'une des revendications 1 à 3, dans lequel le système d'extraction (24) comprend une cage à cartouche (8) qui se déplace vers les éléments permettant l'écoulement de la boisson grâce à un piston.

5. Dispositif selon l'une des revendications 1 à 4, dans lequel on dispose sous les éléments permettant l'écoulement de la boisson un canal d'écoulement (29) à deux positions pour le remplissage successif de deux tasses.

## Patentansprüche

1. Vorrichtung zur Extraktion einer Substanz für die Herstellung eines Getränks ausgehend von einer Kartusche (33), umfassend
- ein Gestell mit einem Sockel (16), einem vertikalen Teil (17) auf diesem Sockel und einem horizontalen Teil (18), der in einem gewissen Abstand vom Sockel angeordnet ist,
- einen beweglichen Schieber (19),
- ein Elementesystem (21) zur Aufnahme der Kapsel und für den Abfluss des Getränks und
- ein Extraktionssystem (24), das auf das Elementesystem zu beweglich ist, um die Kartusche einzuschließen und zu extrahieren,
**dadurch gekennzeichnet,**
**dass** der horizontale Teil (18) das Elementesystem (21) umfasst, wobei das Extraktionssystem (24) über dem Elementesystem (21) angeordnet ist, und
**dass** der bewegliche Schieber (19) so ausgebildet ist, dass er auf dem horizontalen Teil (18) so gleitet, dass er eine erste Kapsel (33) bis zu ihrer Positionierung über dem Elementesystem mitnimmt und eine Rückkehr in die Anfangsstellung für das Einsetzen einer zweiten Kapsel (34) gestattet, wobei die erste Kapsel auf dem Elementesystem (21) bleibt.

2. Vorrichtung nach Anspruch 1, bei dem das System (24) zur Extraktion der Kartusche außerhalb des beweglichen Schiebers (19) durch zwei vertikale Mittel (25) auf dem horizontalen Teil des Gestells gehalten wird.

3. Vorrichtung nach einem der Ansprüche 1 oder 2, bei der das Elementesystem (21) für den Abfluss des Getränks Teil eines Auswerfers (32) zum Ausstoß der verbrauchten Kartuschen aus der Vorrichtung nach hinten bildet, der bei der Aufwärtsbewegung des Extraktionssystems (24) betätigt wird.

4. Vorrichtung nach einem der Ansprüche 1 bis 3, bei der das Extraktionssystem (24) einen Kartuschenkäfig (8) aufweist, der sich mit Hilfe eines Kolbens auf die Elemente für den Abfluss des Getränks zu bewegt.

5. Vorrichtung nach einem der Ansprüche 1 bis 4, bei der man unter den Elementen, die das Abfließen des Getränks gestatten, einen Ablaufkanal (29) mit zwei Stellungen für das aufeinanderfolgende Befüllen von zwei Tassen anordnet.

## Claims

1. A device for extracting a substance from a cartridge (33) for the preparation of a beverage, comprising
- a stand with a base (16), a vertical part (17) on said base and a horizontal part (18) disposed at a certain distance from the base,
- a mobile slider (19)
- a system of elements (21) for receiving the capsule and allowing outflow of the beverage, and
- an extraction system (24) movable towards said system of elements for holding and extracting the cartridge,
**characterised in that**
the horizontal part (18) comprises the system of elements (21), the extraction system (24) being disposed above the system of elements (21), and **in that**
the mobile slider (19) is configured to slide over the horizontal part (18) in such a way as to carry a first capsule (33) into position on the system of elements, and to allow return to the initial position for positioning of a second capsule (34), while retaining the first capsule on the system of elements (21).

2. A device according to claim 1, in which the extraction system (24) for the cartridge is supported by two vertical means (25) on the horizontal part of the stand, to the outside of the mobile slider (19).

3. A device according to either one of claims 1 or 2, in which the system of elements (21) allowing outflow of the beverage constitutes part of an ejector (32) for discarding the used cartridges to the rear of the device, this being actuated as the extraction system (24) ascends.

4. A device according to any one of claims 1 to 3, in which the extraction system (24) comprises a cartridge holder (8) which is moved by means of a piston towards the elements allowing outflow of the beverage.

5. A device according to any one of claims 1 to 4, in which an outflow channel (29) with two positions for successive filling of two cups is disposed beneath the elements allowing outflow of the beverage.
